# EUROPEAN PATENT APPLICATION

(11) **EP 4 201 222 A1**
(43) Date of publication of application: **28.06.2023**
(21) Application number: 21216274.7
(22) Date of filing: 21.12.2021
(51) Int. Cl.: A23K 20/111, A23K 50/10, A23K 10/30, A23K 20/158, A23K 20/105

(54) **COMBINATION OF BORNYL ACETATE AND CITRAL FOR DECREASING ENTERIC METHANE PRODUCTION IN RUMINANTS**

(71) Applicant: Société des Produits Nestlé S.A., 1800 Vevey (CH)
(72) Inventor: The designation of the inventor has not yet been filed
(74) Representative: Elleby, Gudrun

(57) **Abstract**

The present invention relates to a feed supplement/feed additive comprising bornyl acetate and citral. The invention also relates to animal feed comprising the feed ingredients/feed supplement. The animal feed is for decreasing enteric methane production in a ruminant animal, such as cattle.

## Description

### Technical field of the invention

The present invention relates to a feed supplement/feed additive comprising bornyl acetate and citral. The invention also relates to animal feed comprising the feed supplement/feed additive. In particular, the present invention relates to the use of the supplement/feed additive and/or feed for decreasing methane production in ruminant animals, such as cattle.

### Background of the invention

Dairy and livestock ingredients are one of the largest single source of greenhouse gas (GHG) emissions. Methane produced as a result of the ruminal digestion of feed, a process known as enteric fermentation. It is the largest source of GHG emissions in cattle production systems. Among the many approaches that have been evaluated recently, the use of feed additives targeting the decrease of methane production during enteric fermentation has been considered as a potentially promising route.

EP 3 102 219 relates to a method of decreasing total gas production and/or methane production in a ruminant animal using red marine macroalgae (A. *taxiformis*)*.*

EP 2 654 455 relates to the use of at least one organic molecule substituted at any position with at least one nitrooxy group for decreasing the production of methane emanating from the digestive activities of ruminants.

Hence, feed additives to decrease methane production in ruminant animals are advantageous, and in particular, a more efficient and/or reliable feed additive for decreasing methane production in a ruminant animal would be even more beneficial.

### Summary of the invention

The present invention relates to a feed supplement/feed additive comprising bornyl acetate and citral. The invention also relates to animal feed comprising the feed supplement/feed additive. In particular, the present invention relates to the use of the feed additive for decreasing enteric methane production in a ruminant animal, such as cattle. As outlined in the example section, specific combinations have been identified which can decrease enteric methane production in a ruminant animal and/or preserve an acceptable digestibility of the feed. For example, the detrimental effect on digestibility observed during supplementation of bornyl acetate and citral (21.4% decrease) was clearly lower than the expected negative additive effect of its individual components (see example 2).

Thus, an object of the present invention relates to the provision of animal feed, which can decrease enteric methane production in a ruminant animal.

Another object of the present invention relates to the inclusion of an additive in animal feed, which can decrease enteric methane production in a ruminant animal while preserving an acceptable digestibility of the feed.

Thus, an aspect of the invention relates to a feed supplement or feed additive comprising bornyl acetate and citral.

Another aspect of the present invention relates to an animal feed comprising or consisting of the feed supplement or feed additive according to the invention.

Yet another aspect of the present invention relates to the use of the feed supplement or feed additive according to the invention or the animal feed according to the invention for decreasing enteric methane emission from a ruminant.

Yet a further aspect of the invention relates to a method for decreasing total gas production and/or enteric methane production in a ruminant animal, comprising the step of administering/feeding to said ruminant animal an effective amount of the feed supplement or feed additive according to the invention, or the animal feed according to the invention.

### Brief description of the figures

*Figure 1*

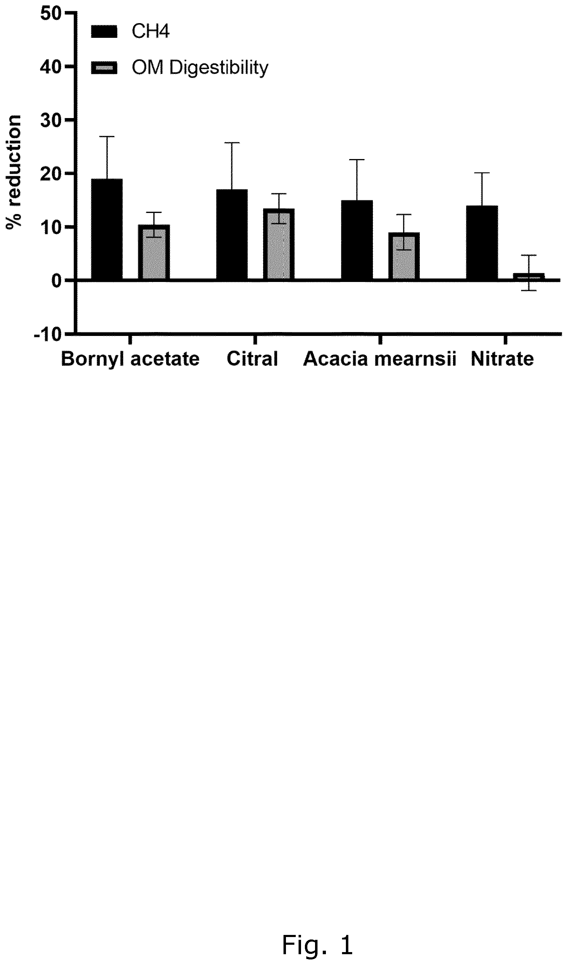

   Figure 1 shows the effect of individual feed additives on the in vitro decrease of methane production and organic matter digestibility compared to the control group after 24-hour incubation.
*Figure 2*

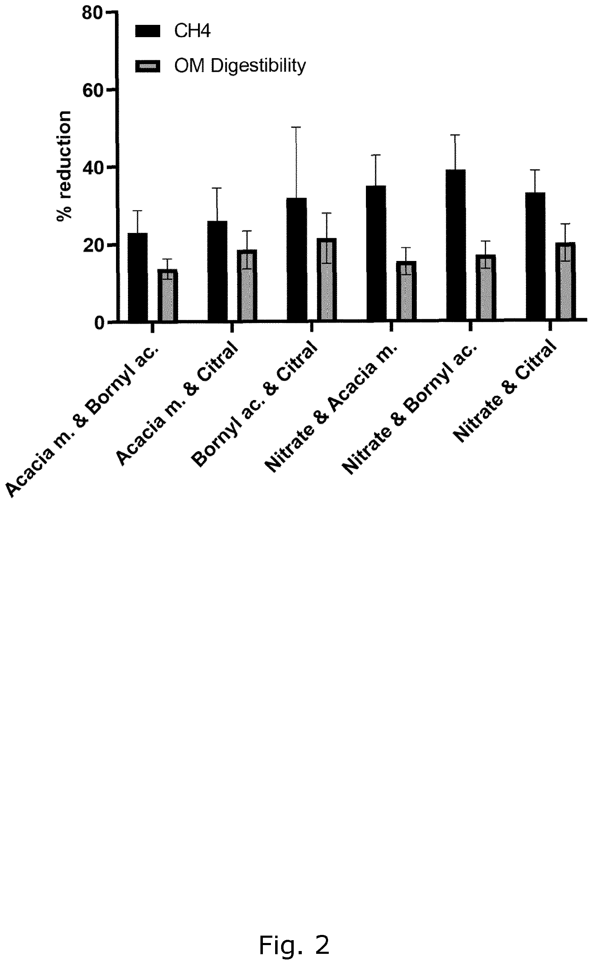

   Figure 2 shows the effect of feed additives combinations on the in vitro decrease of methane production and organic matter digestibility compared to the control group after 24-hour incubation.

The present invention will now be described in more detail in the following sections.

### Detailed description of the invention

### Definitions

Prior to discussing the present invention in further details, the following terms and conventions will first be defined:

### Total mixed ration (TMR)

Total mixed ration (TMR) is a method of feeding dairy cattle. The purpose of feeding a TMR diet is that each cow can consume similar amounts of a homogenous mix of the different ingredients in each bite, so to assure that the cow receives its required level of nutrients each day. A cow's ration should include good quality forage, energy and protein concentrates, macro and microminerals, and vitamins. The TMR used in this project is supplied by Agrovet-strickhof.

### In Vitro Organic Matter Digestibility (IVOMD)

In Vitro Organic Matter Digestibility (IVOMD), is a measure of the ruminal microbiota capacity to degrade and utilize organic matter from dietary origin through enzymatic and chemical processes. A decrease in in vitro organic matter digestibility could be an indicator of detrimental effects on the health and functionality of the ruminal microbial ecosystem.

### Weight dry matter

In the present context, the "weight dry matter" or "dry matter weight" or "dry weight" is a measurement of the mass of all the constituents of an ingredient or product excluding water. Unless otherwise stated, the weights indicated are by weight dry matter. Unless otherwise stated, the weights indicated are by weight dry matter.

### Essential oil

In the present context, an "essential oil" is a concentrated hydrophobic liquid containing plant secondary metabolites in the form of volatile chemical compounds. Essential oils are also known as "volatile oils", "ethereal oils", "aetheroleum", or simply as the oil of the plant from which they were extracted.

Bornyl acetate and citral are considered essential oils.

### Citral

"Citral", or "3,7-dimethyl-2,6-octadienal" or "lemonal", is either a pair, or a mixture of terpenoids with the molecular formula C₁₀H₁₆O. The two compounds are geometric isomers. The E-isomer is known as geranial or citral A. The Z-isomer is known as neral or citral B. Citral may be considered an essential oil.

### Bornyl acetate

Bornyl acetate is a chemical compound. Its molecular formula is C₁₂H₂₀O₂. It is the acetate ester of borneol. It is a component of the essential oil from pine needles (from the family Pinaceae). Thus, bornyl acetate may be considered an essential oil.

### Acacia mearnsii

*Acacia mearnsii,* commonly known as black wattle, late black wattle, or green wattle, is a species of flowering plant in the family Fabaceae. The bark of *Acacia mearnsii* is rich in wattle tannins composed of polyflavanoids and their precursors, while the hardwood of *A. mearnsii* serves as a source for the extraction of leuco-fisetinidin and profisetinidins. In this project, commercially obtained *A. mearnsii* product refers to the wattle tannin extracted from the bark.

### Decreasing

As used herein, the term "decreasing" includes the decrease of amount of substance in comparison with a reference. For example, the decrease in the amount of total gas and/or methane produced by a ruminant animal or animals administered a composition according to the invention, relative to an animal or animals not administered a composition according to the invention. The decrease can be measured in vitro with an artificial rumen system that simulates anaerobic fermentation, or in vivo with animals confined in a respiration chamber, using the SF₆ tracer gas method or using an Automated Head-Chamber System (AHCS), such as a GreenFeed System (C-Lock Inc.; Rapid City, SD) or similar. The GreenFeed system is a system designed to measure gas fluxes of Methane (CH₄), Carbon Dioxide (CO₂), and optionally, Oxygen (O₂), and Hydrogen (H₂) from individual animals. It is also possible to aggregate emissions data from individual animals and determine herd averages.

It is within the knowledge and skill of those trained in the art to assess enteric methanogenesis by a ruminant animal.

### Anaerobic fermentation

As used herein the term "anaerobic fermentation" is intended to include anaerobic fermentation in vitro, for example, in a vacutainer, or in vivo, for example, in a ruminant animal.

### Decreasing total enteric gas production

As used herein, the term "decreasing total gas production" refers to the decrease of the total amount of gas produced, for example the amount of total gas produced during in vitro etc. in rumen fermentation. The term includes the collective volume of all gasses generated as a result of anaerobic fermentation, for example, in the systems described herein. Fermentation in the rumen and the gut of a ruminant gives rise to production of gas including methane. The present invention aims to decrease this process, such as to decrease the total amount of gas produced in the gastro-intestinal tract. It is within the knowledge and skill of those trained in the art to assess total gas production by a ruminant animal.

### Decreasing enteric methane production

As used herein, the term "decreasing methane production" refers to the decrease of methane produced during ruminal digestion. The term includes the specific volume of methane generated as a result of anaerobic fermentation.

Fermentation in the rumen and the gut of a ruminant gives rise to production of methane. The present invention aims to decrease this process, such as to decrease the total amount of enteric methane produced in rumen fermentation. It is within the knowledge and skill of those trained in the art to assess methane production by a ruminant animal.

### Feed ingredient/feed supplement

As outlined in the example section, specific combinations have been identified which can decrease enteric methane production in a ruminant animal and/or preserve an acceptable digestibility of the feed (see example 2). Thus, an aspect of the invention relates to a feed supplement or feed additive comprising bornyl acetate and citral.

In an embodiment, the feed supplement or feed additive further comprises
a) one or more tannins, preferably *Acacia mearnsii* derived tannins; and/or
b) one or more nitrates; preferably calcium ammonium nitrate; and/or
c) one or more essential oils, different from bornyl acetate and citral.

The feed supplement or feed additive is for decreasing enteric methane production. Thus, in an embodiment, the feed ingredient or feed supplement is for ruminants.

The ratio between the different components may vary. Thus, in an embodiment, in the feed ingredient or feed supplement,
a) the ratio by weight dry matter of bornyl acetate and citral is in the range 0.01-100, preferably 0.1-10, more preferably 0.5-5.

In another embodiment, in the feed ingredient or feed supplement,
a) the ratio by weight dry matter of the one or more essential oils and the one or more tannins is in the range 0.01-120, preferably 0.1-12, more preferably 0.5-5; and/or
b) the ratio by weight dry matter of the one or more essential oils, different from different from bornyl acetate and citral, to the one or more nitrates is in the range 0.01-250, preferably 0.1-25, more preferably 1-15; and/or
c) the ratio by weight dry matter of the one or more tannins and to the one or more nitrates is in the range 0.02-200, preferably 0.2-20, more preferably 1-10.

The tannins according to the invention may be derived from different sources. Thus, in an embodiment, the one or more tannins is selected from the group consisting of *Acacia mearnsii* derived tannins, Carob pulp (*Ceratonia siliqua*) derived tannins, Quebracho extract (*Schinopsis quebracho-colorado*) derived tannins, Birdsfoot trefoil (*Lotus corniculatus*) derived tannins, Chestnut tree wood extract derived tannins, Hazel leaves derived tannins, *Leucaena leucocephala* leaves derived tannins, *Calliandra calothyrsus* leaves derived tannins and *Flemingia macrophylla* leaves derived tannins.

In a preferred embodiment, the one or more tannins are *Acacia mearnsii* derived tannins. In another preferred embodiment, the wattle tannin is extract from the bark. In the example section, this source of tannins has been tested.

In yet an embodiment, the tannins comprise wattle tannin, and/or profisetinidin and/or leuco-fisetinidin.

In an embodiment, the one or more nitrates is calcium ammonium nitrate.

In an embodiment, the feed supplement or feed additive further comprises one or more nitrates, preferably calcium ammonium nitrate.

The amount of the components may also vary in the feed supplement/additive. Thus, in an embodiment, the feed supplement or feed additive comprises
- in the range 0.1 ppm to 50 g/kg by weight of citral, such as 0.1-50 g/kg, such as 1-50 g/kg, preferably 10-50 g/kg, more preferably 20-50 g/kg by weight of citral; and
- in the range 0.1 ppm to 50 g/kg by weight of bornyl acetate, such as 0.1-50 g/kg, such as 1-50 g/kg, preferably 10-50 g/kg, or more preferably 20-50 g/kg by weight of bornyl acetate.

In another embodiment, the feed supplement or feed additive further comprises in the range 0.1 ppm to 50 g/kg by weight of one or more essential oils different from bornyl acetate and citral, such as 0.1-50 g/kg, such as 1-50 g/kg, preferably 10-50 g/kg, more preferably 20-50 g/kg by weight of one or more essential oils different from bornyl acetate and citral.

In yet another embodiment, the feed supplement or feed additive further comprises in the range 0.1 ppm to 50 g/kg by weight of one or more tannins, such as 0.1-50 g/kg, such as 1-50 g/kg, preferably 10-50 g/kg, more preferably 20-50 g/kg by weight of one or more tannins.

In a further embodiment, the feed supplement or feed additive further comprises in the range 0.1 ppm to 50 g/kg by weight of one or more nitrates, such as 0.1-50 g/kg, such as 1-50 g/kg, preferably 10-50 g/kg, more preferably 20-50 g/kg by weight of one or more nitrates.

In yet another embodiment, the feed supplement or feed additive is in the form of pellets, liquid, solid, slurry or powder.

### Animal feed

The feed supplement or feed additive according to the invention is intended to be included into an animal feed Thus, another aspect of the invention relates to an animal feed comprising or consisting of the feed supplement or feed additive according to the invention.

In an embodiment, the animal feed is for a ruminant.

Different amounts of essential oils acetate and tannins may be present in the animal feed. In the example section 5.7% by weight bornyl acetate, 5.7% by weight citral, 5% by weight *Acacia mearnsii* tannins and 2.5% by weight nitrate were used in the tests (see example 1). Thus, in an embodiment, the animal feed com prises
- in the range 0.5-15% by weight of bornyl acetate, preferably in the range 2-10%, more preferably in the range 4-8% by weight of bornyl acetate; and
- in the range in the range 0.5-15% by of citral, preferably in the range 2-10%, more preferably in the range 4-8% by weight of citral.

In another embodiment, the animal feed comprises in the range 0.5-15% by weight of one or more essential oils different from bornyl acetate and citral, preferably in the range 2-10%, more preferably in the range 4-8% by weight of one or more essential oils different from bornyl acetate and citral.

In yet an embodiment, the animal feed comprises in the range 0.5-15% by weight of one or tannins, preferably in the range 1-10%, more preferably in the range 3-8% by weight of one or more tannins.

In yet another embodiment, the animal feed comprises in the range 0.2-10% by weight of one or more nitrates, preferably in the range 0.8-5%, more preferably in the range 1-3% by weight of one or more nitrates.

In an embodiment, the animal feed is in the form of a total mixed ration (TMR).

In yet an embodiment, the animal feed further comprises forage, grains, proteins, vitamins and/or minerals.

### Uses and methods

The feed supplement or feed additive and the animal feed according to the invention can be used in different ways. Thus, a further aspect of the invention relates to the use of the feed supplement or feed additive according to the invention or the animal feed according to the invention for decreasing methane emission from a ruminant.

Yet a further aspect of the invention relates to a method for decreasing total gas production and/or methane production in a ruminant animal comprising the step of administering/feeding to said ruminant animal an effective amount of the feed supplement or feed additive according to the invention, or the animal feed according to the invention.

In an embodiment, the method comprises supplementing feed intended for said animal with said effective amount of the feed ingredient or feed supplement according to the invention and feeding the animal feed to the ruminant.

In another embodiment, the methane emission is emanating from the digestive activities of the ruminant.

In yet another embodiment, the methane production in the ruminant is decreased by at least 10%, preferably at least 20% and more preferably at least 30%. The decrease may be measured in a metabolic chamber, using the SF₆ tracer gas method or using an Automated Head-Chamber System (AHCS). Decrease may be calculated in liters per kilogram of dry matter intake and/or compared to ruminants not receiving a feed ingredient according to the invention.

In an embodiment, the amount of feed supplement or feed additive administered to the ruminant animal is from 0.5 mg to 30 g per kg feed on a dry matter basis, such as 1 mg to 10 g per kg feed on a dry matter basis.

In another embodiment, the amount of feed supplement or feed additive administered to the ruminant on a daily basis is from 10 mg to 750 g on a dry matter basis, such as 50 mg to 500 g on a dry matter basis.

In an embodiment, the feed is orally administering in a sufficient amount to decrease methane production in said animal.

In yet an embodiment, the ruminant animal is selected from the group consisting of cattle, goats, sheep, giraffes, American Bison, European bison, yaks, water buffalo, deer, camels, wildebeest, antelope, pronghorn, and nilgai. Preferably, the ruminant is cattle.

In another preferred embodiment the cattle is beef cattle or dairy cattle, more preferably dairy cattle.

In yet another embodiment, the use or method is non-therapeutic.

### Other aspects of the invention

As outlined in the example section, both the individual tested components and different combinations can decrease methane production in a ruminant animal and/or preserve an acceptable digestibility of the feed.

Thus, an aspect of the invention relates to the use of a feed supplement or feed additive or an animal feed comprising
- one or more tannins, such as *Acacia mearnsii* derived tannins; and/or
- bornyl acetate; and/or
- citral; and/or
- one or more nitrates, such as nitrate; and/or
- one or more essential oils, such as bornyl acetate and/or citral; for decreasing methane emission from a ruminant.

Another aspect of the invention relates to the use of a feed supplement or feed additive or an animal feed comprising
a) bornyl acetate and citral; and/or
b) one or more essential oils, preferably bornyl acetate and/or citral and one or more tannins, preferably *Acacia mearnsii* derived tannins; and/or
c) one or more essential oils preferably bornyl acetate and/or citral and one or more nitrates; and/or
d) one or more tannins, preferably *Acacia mearnsii* derived tannins and one or more nitrates.
for decreasing methane emission from a ruminant.

Yet another aspect of the invention relates to a feed supplement or feed additive comprising
a) bornyl acetate and citral; and/or
b) one or more essential oils, preferably bornyl acetate and/or citral and one or more tannins, preferably *Acacia mearnsii* derived tannins; and/or
c) one or more essential oils preferably bornyl acetate and/or citral and one or more nitrates; and/or
d) one or more tannins, preferably *Acacia mearnsii* derived tannins and one or more nitrates.

It should be noted that embodiments and features described in the context of one of the aspects of the present invention also apply to the other aspects of the invention.

All patent and non-patent references cited in the present application, are hereby incorporated by reference in their entirety.

The invention will now be described in further details in the following non-limiting examples.

### Examples

### Example 1 - Decrease in methane production of individual compounds

### Aim of study

To determine the effect on methane decrease of different individual compounds.

### Materials and methods

Around 100 compounds, including essential oils, prebiotics, spices, tannins, microalgae, lipids and others, were selected based on their potential antimethanogenic capabilities, as described in the literature, and were screened using an in vitro model.

Hohenheim Gas Test:
The in vitro model was based on the Hohenheim Gas Test, in which ruminal fluid collected in an abattoir from slaughtered dairy cows was transported to a laboratory, and used, in addition to artificial saliva, to anaerobically incubate TMR samples (Arovet-Strickhof, Lindau, CH; composition: 40% maize silage, 40% grass silage, 15% hay, and 5% concentrate) mixed with each individual compound in 100-mL glass syringes coupled to piston pipettes. The syringes were incubated at 39°C for 24 hours to allow for the potential effect of the compounds on gas production, methane and carbon dioxide concentration, and in vitro organic matter digestibility (IVOMD) to be detected.

After this initial assessment and based on the results for the different variables evaluated, bornyl acetate (Merck, Darmstadt, DE), citral (Merck, Darmstadt, DE), Acacia mearnsii tannins (CDM tannin, Hamburg, DE), and nitrate (Merck, Darmstadt, DE) were selected for further analysis. Following the methodology described before, bornyl acetate (57 g/kg TMR DM), citral (57 g/kg TMR DM), *Acacia mearnsii* tannins (50 g/kg TMR DM), and nitrate (25 g/kg TMR DM) were subjected to further evaluation. Finally, in a last step, pairwise combinations of the individual compounds were subjected to a new evaluation, to detect additive or synergistic effects on dependent variables.

The combinations were:
- *Acacia mearnsii* tannins and bornyl acetate,
- *Acacia mearnsii* tannins and citral,
- bornyl acetate and citral,
- nitrate and *Acacia mearnsii* tannins,
- nitrate and bornyl acetate, and
- nitrate and citral.

In vitro method for determining methane mitigation effect:
The in vitro fermentation was carried out using the Hohenheim Gas Test (HGT) equipment, an incubator with a rotor that can hold 57 glass syringes. The technical detail of each run was described below:
Each additive mixed with TMR was weighed (200 ± 0.1 mg DM) and brought deep into a 100 mL HGT syringe. Each syringe was coupled with a greased piston and has two outlets, and the rubber outlet allows for the release of liquid while the glass outlet allows the sampling of gas.

On the day of incubation, rumen fluids were obtained from three slaughtered cows. The rumen fluids were filtered through a nylon filter (250 µm pore size) and sampled for ammonia concentration and pH. Two rumen fluids within the criteria (pH 5-7, ammonia con. 3-8 mmol/L) were selected for incubation.

To start the incubation, trace element solution, buffer solution, main mineral solution was added into a flask under continuous flushing of CO₂. Resazurin was added to the flask as a redox indicator, followed by the freshly prepared reducing solution. The buffer-mineral solution became colorless when the oxygen was consumed, thus creating an anaerobic environment to simulate rumen. The strained rumen fluid was added to the mineral/buffer solution and kept under CO₂ flushing for 15 minutes. Each syringe was filled with 30 mL of buffered rumen fluid anaerobically with the help of a dispenser. The initial liquid (fluid_Vo, mL) and gas volume (gas_V₀, mL) were noted, ensuring that air bubbles in the syringe were carefully released. Time was recorded when the syringe was placed in the rotor. Samples were taken from the buffered rumen fluid for VFA analysis, microbe counts (protozoa and bacteria), and microbiome analysis.
After 24 h, the first syringe was taken out to read the liquid volume (fluid_V₂₄, mL) and gas volume (gas+fluid_V₂₄, mL). Liquid content was released from the rubber outlet without releasing gas. Liquid sample was taken for pH measurement, bacteria (20 µL + 1980 µl formalin 4 %) and protozoa (500 µL + 500 µL formalin 6 %) counting, ammonia (3 mL + 60 µL TCA, 50 %), microbiome analysis (5 mL), and VFA analysis (4 mL). A gas sample (150 µL) was taken from the HGT syringe and injected into the gas chromatograph to measure the content of CH₄, CO₂, H₂, and N₂. The same procedure was repeated until all the samples were taken from 57 syringes.

TMR and additives were subjected to chemical analysis. The organic matter (OM) content was calculated by subtracting ash content from DM content. The *in vitro* organic matter degradability (IVOMD) was obtained by subtracting OM residue from their initial OM amounts before the incubation. After 24 h (mL), total gas production was corrected for blank gas production. Methane production was calculated against the amount of incubated OM to obtain CH₄ mL g⁻¹ of incubated OM. The change of methane production due to additives was determined by comparing additive treatments and TMR control, so the decrease and increase of methane from additives treatments were calculated and expressed as a percentage of TMR control. (Note: the average was taken between data generated from different rumen fluid sources, and each rumen fluid source has its corresponding control and blank value).

### Results

Of the tested compounds, Table 1 lists selected compounds with significant CH₄ decrease and minimal impact on digestibility (see also figure 1).

**Table 1: Average CH₄ and IVOMD decreases of selected individual compounds versus negative control.**

| | **Average CH4 decrease (%)** | | **Average IVOMD decrease (%)** | |
|---|---|---|---|---|
| **Individual compounds** | **Mean** | **SD** | **Mean** | **SD** |
| Nitrate medium | **14** | 6.1 | **4.5** | 3.3 |
| Bornyl acetate | **19** | 7.9 | **10.4** | 2.3 |
| Citral | **17** | 8.7 | **13.4** | 2.8 |
| *Acacia mearnsii* tannins | **15** | 7.6 | **9.0** | 3.3 |
| | different to TMR at *P <* 0.05 | | different to TMR at *P* < 0.05 | |

### Conclusion

As can be seen from table 1, nitrate (calcium ammonium nitrate), bornyl acetate, Citral, and *Acacia mearnsii* tannins all showed acceptable effects in relation to CH4 decrease and IVOMD.

### Example 2 - Decrease in methane production of binary combinations

### Aim of study

To identify effects on CH4 decrease and digestibility of combinations of the compounds identified in Example 1.

### Materials and methods

Please refer to example 1 for technical details regarding the experimental procedure.

The following six binary combinations were tested:
- Nitrate (25 g/kg DM*) + Bornyl acetate (57 g/kg DM/400 mg/L)
- Nitrate (25 g/kg DM*) + Citral (57 g/kg DM/400 mg/L)
- Nitrate (25 g/kg DM*) + Acacia mearnsii (50 g/kg DM)
- Bornyl acetate (57 g/kg DM/400 mg/L) + Acacia mearnsii (50 g/kg DM)
- Bornyl acetate (57 g/kg DM/400 mg/L) + Citral (57 g/kg DM/400 mg/L)
- Citral (57 g/kg DM/400 mg/L) + Acacia mearnsii (50 g/kg DM)

### Results

Table 2 lists CH₄ decreases and impact on digestibility of the tested combinations (see also figure 2).

**Table 2: Average CH4 and IVOMD decreases of combinations of compounds versus negative control.**

| | **Average CH4 decrease (%)** | | **Average IVOMD decrease (%)** | |
|---|---|---|---|---|
| **Binary compounds** | **Mean** | **SD** | **Mean** | **SD** |
| Nitrate + *Acacia mearnsii tannins* | **35** | 7.8 | **15.4** | 3.5 |
| Nitrate + Bornyl acetate | **39** | 8.9 | **17.0** | 3.5 |
| Nitrate + Citral | **33** | 5.8 | **20.0** | 4.8 |
| *Acacia mearnsii* tannins + Bornyl acetate | **23** | 5.8 | **13.7** | 2.6 |
| *Acacia mearnsii* tannins + Citral | **26** | 8.5 | **18.5** | 4.9 |
| Bornyl acetate + Citral | **32** | 18.1 | **21.4** | 6.5 |
| | **different to TMR at P < 0.05** | | **different to TMR at *P* < 0.05** | |

As can be seen when comparing Table 1 and Table 2, although the effect of combinations of ingredients on methane decrease does not always demonstrate additive or synergistic effects over the individual ingredients, a surprising amelioration of the expected negative effects on IVOMD was observed.

For example, the decrease in IVOMD observed when testing the combination of *Acacia mearnsii* tannins and bornyl acetate (13.7% decrease) was lower than the expected negative additive effect of the response observed during the testing of individual ingredients (9% and 10.4% decrease for *Acacia mearnsii* tannins and bornyl acetate, respectively).

Similarly the detrimental effect on digestibility observed by supplementation of bornyl acetate and citral (21.4% decrease) was clearly lower than the expected negative additive effect of its individual components (10.4% and 13.4% decrease for bornyl acetate and citral, respectively). A similar case could me made with the use of a combination of *Acacia mearnsii* tannins and Citral.

This discovery allows to achieve greater methane decrease than those achieved with single ingredients without the associated risk of an excessive impact on ruminal microbiome health.

### Conclusion

As can be seen from Table 1 and Table 2 the combinations may show either a synergistic or additive effect in relation to methane mitigation and/or are surprisingly low drop in digestibility when comparing to the individual tests.

## Claims

1. A feed supplement or feed additive comprising bornyl acetate and citral.

2. The feed ingredient or feed supplement according to claim 1, being for ruminants.

3. The feed supplement or feed additive according to claim 1 or 2, wherein the ratio by weight dry matter of bornyl acetate and citral is in the range 0.01-100, preferably 0.1-10, more preferably 0.5-5.

4. The feed supplement or feed additive according to any of the preceding claims, comprising
• in the range 0.1 ppm to 50 g/kg by weight of citral, such as 0.1-50 g/kg, such as 1-50 g/kg, preferably 10-50 g/kg, or more preferably 20-50 g/kg by weight of citral; and
• in the range 0.1 ppm to 50 g/kg by weight of bornyl acetate, such as 0.1-50 g/kg, such as 1-50 g/kg, preferably 10-50 g/kg, or more preferably 20-50 g/kg by weight of bornyl acetate.

5. The feed supplement or feed additive according to any of the preceding claims, comprising
• in the range 0.1 ppm to 50 g/kg by weight of one or more essential oils different from bornyl acetate and citral, such as 0.1-50 g/kg, such as 1-50 g/kg, preferably 10-50 g/kg, more preferably 20-50 g/kg by weight of one or more essential oils different from bornyl acetate and citral; and/or
• in the range 0.1 ppm to 50 g/kg by weight of one or more tannins, such as 0.1-50 g/kg, such as 1-50 g/kg, preferably 10-50 g/kg, more preferably 20-50 g/kg by weight of one or more tannins; and/or
• in the range 0.1 ppm to 50 g/kg by weight of one or more nitrates, such as 0.1-50 g/kg, such as 1-50 g/kg, preferably 10-50 g/kg, more preferably 20-50 g/kg by weight of one or more nitrates.

6. The feed supplement or feed additive according to claim 5, wherein the one or more tannins is selected from the group consisting of *Acacia mearnsii* derived tannins, such as wattle tannin, profisetinidin and/or leuco-fisetinidin.

7. An animal feed comprising or consisting of the feed supplement or feed additive according to any of claims 1-6.

8. The animal feed according to claim 7, being for a ruminant.

9. The animal feed according to claim 7 or 8 comprising
• in the range 0.5-15% by weight of bornyl acetate, preferably in the range 2-10%, more preferably in the range 4-8% by weight of bornyl acetate; and
• in the range in the range 0.5-15% by weight of citral, preferably in the range 2-10%, more preferably in the range 4-8% by weight of citral.

10. The animal feed according to any of claims 7-9, comprising
• in the range 0.5-15% by weight of one or more essential oils different from bornyl acetate and citral, preferably in the range 2-10% by weight, more preferably in the range 4-8% by weight of one or more essential oils different from bornyl acetate and citral.

11. The animal feed according to any of claims 7-10, comprising in the range 0.5-15% by weight of one or tannins, preferably in the range 1-10%, more preferably in the range 3-8% by weight of one or more tannins.

12. Use of the feed supplement or feed additive according to any of claims 1-6, or the animal feed according to any of claims 7-11 for decreasing enteric methane emission from a ruminant.

13. A method for decreasing total enteric methane production in a ruminant animal comprising the step of administering/feeding to said ruminant animal an effective amount of the feed supplement or feed additive according to any of claims 1-6, or the animal feed according to any of claims 7-11.

14. The use according to claim 12 or method according to claim 13, wherein the ruminant animal is selected from the group consisting of cattle, goats, sheep, giraffes, American Bison, European bison, yaks, water buffalo, deer, camels, wildebeest, antelope, pronghorn, and nilgai, preferably cattle.

15. The use according to claim 12 or method according to claim 13, being non-therapeutic.
